# EUROPEAN PATENT APPLICATION

(11) **EP 4 557 194 A1**
(43) Date of publication of application: **21.05.2025**
(21) Application number: 23210667.4
(22) Date of filing: 17.11.2023
(51) Int. Cl.: G06Q 10/083, G06Q 10/0833

(54) **A SOFTWARE PLATFORM AND METHOD FOR ORGANISING DISPATCHES AND/OR TRANSPORT OF GOODS**

(71) Applicant: Siwego S.r.l., 38068 Rovereto Trento (IT)
(72) Inventor: FAVALLI, Marcello, 38068 Rovereto (Trento) (IT)
(74) Representative: Anselmi, Davide

(57) **Abstract**

A software platform (1) for organising dispatches and/or transport of goods, comprising:
- a user interface configured to receive personal data of the main user;
- a database (2) connected to the user interface and configured to collect the profiles identifying a plurality of third-party users;
- a control unit (3) connected to the user interface and to the database (2) and configured to:
receive from the main user, identified as the customer user (4) or transporter user, a request to dispatch or transport goods from a collection place (6a) of the goods to a delivery place (6b) of the goods starting from a certain date "X" to arrive at a certain date "Y";
search inside the database (2) for profiles of transporter users (5) that have selected the function of transporting goods from a departure place (A) to an arrival place (B) according to a path that includes the collection place (6a) of the goods and the delivery place (6b) of the goods inside the range of predefined dates;
put the profile(s) of found transporter users (5) that correspond to search criteria in electronic contact with the customer user (4), preferably via a chat message;
confirm (10) transport of the goods if the customer user (4) and the transporter users reach an agreement.

## Description

### TECHNICAL FIELD

The present invention relates to a software platform for organising dispatches and/or transport of goods, as well as a method for organising dispatches and/or transport of goods.

In particular, the present invention falls within the technical field of the organisation, via software, of sharing vehicles for the transport of goods, combining the sector of professional transporters together with the private one, at the same time making it possible to dispatch one's own goods or become dispatchers of others' goods.

### PRIOR ART

Today, 25% of transport vehicles in Europe travel without goods loaded (empty). This means that, in Italy alone, there are more than 1.1 million non-optimised vehicles, which translates into a high value of fuel and time wasted without counting the maintenance of the transport means, the risk of accidents, the pollution generated and the costs of the carrier.

It should further be noted that, according to recent statistical data, e-commerce is constantly growing and still has great potential for development. However, this potential growth can only be actuated if the delivery services do not become a bottleneck for e-commerce. In fact, it is known that 38% of buyers are not satisfied with the delivery service and abandon the "online shopping cart", asking that the following aspects be improved:
1. delivery costs;
2. delivery close to home;
3. electronic access to delivery notifications;
4. real package tracking.

Given the above, different types of software platforms are currently known:
1) "Freight exchange" platforms: these platforms mainly gather professional logistics operators, in order to sell and buy transport;
2) Sharing economy platforms: platforms that offer goods transport and dispatching services only to private users who access them.

One of the known disadvantages is that the two types of platforms mentioned above do not "talk" to each other or do not communicate, leaving in fact many vehicles in circulation without goods transported (empty), generating waste of money (fuel in the first place, but not only), time and environmental pollution.

Moreover, further disadvantages are related to the fact that users require services that are increasingly punctual, with flexible management, traceable and local.

### OBJECT OF THE PRESENT INVENTION

The present invention aims to fill the unused empty space/time of each vehicle, in both the professional and private sectors, thanks to an easy-to-use, secure platform capable of matching users in real time.

In detail, the present invention not only proposes offers coming exclusively from professional transporters or from private citizens to its users, but also combines the two modes together, resulting in being more flexible, more reliable, and with greater usability.

Furthermore, the present invention aims to solve the problem of the dual "functionality" of the users as transporters or senders, since it integrates both these aspects together in a single platform.

In addition, the present invention aims to create a match between all dispatch requests and all transport possibilities present in the route offered by the transporter.

The user community also has available:
1. an evolved chat between customer and transporter;
2. a geolocation system for constant package tracking;
3. an electronic payment system (merely by way of example: Visa and Mastercard);
4. a double OTP code to be sure of the goods' collection and their delivery. Thereby, the platform also manages to replace the hardly verifiable signatures on an alleged transport document, increasing security at the same time and obtaining savings in paper documents, to which greater healthcare security is added (e.g., against Covid);
5. a feedback system for both the customer and the transporter so as to obtain a rating of the carrier and the customer;
6. an automatic sending of the billing to the customer by the platform manager for the part concerning them.

### BRIEF DESCRIPTION OF THE DRAWINGS

The indicated objects are substantially attained by a software platform and method for organising dispatches and/or transport of goods according to what is described in the appended claims.

Further characteristics and the advantages of the present invention will appear more clearly from the detailed description of some preferred, but not exclusive, embodiments of a software platform for organising dispatches and/or transport of goods illustrated in the appended drawings, in which:
- figures 1a and 1b illustrate a flow chart carried out by the software platform or method according to the present invention;

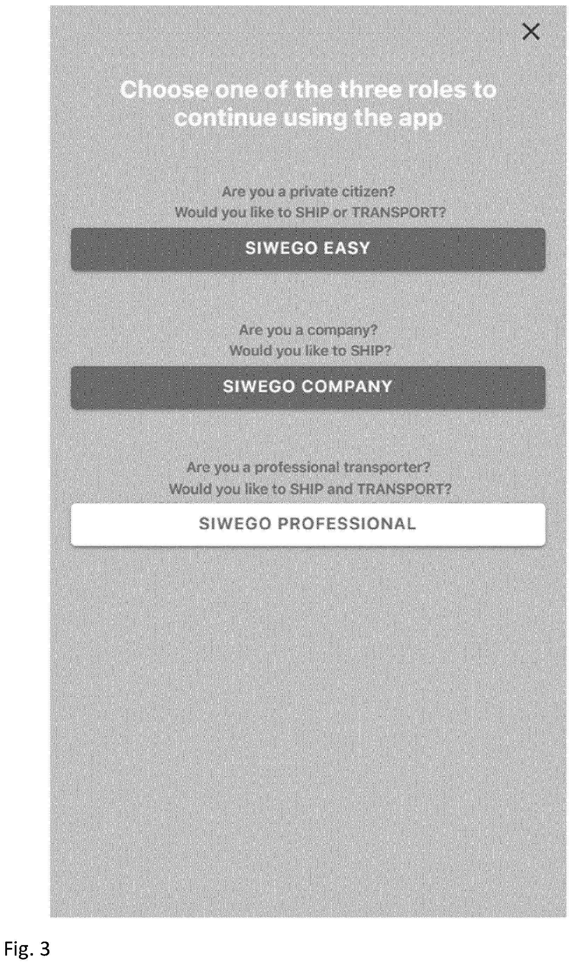

- figures 2-5 show screenshots of the interface of the registration software platform common to both the customer user and transporter user functions;

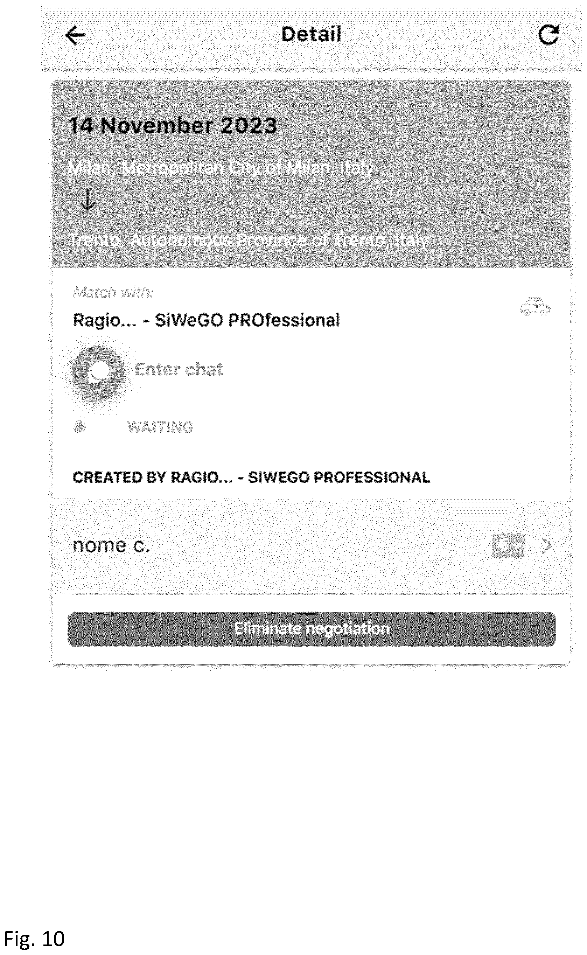

- figures 6-11 show screenshots of the software platform interface in which the main user acts as the customer user; and

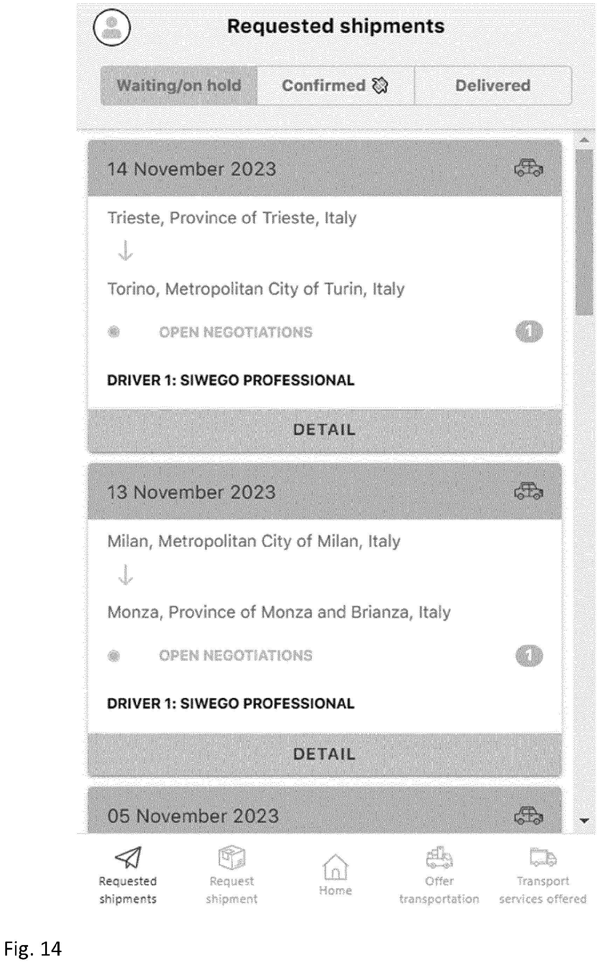

- figures 12-14 show screenshots of the software platform interface in which the main user acts as a transporter user;

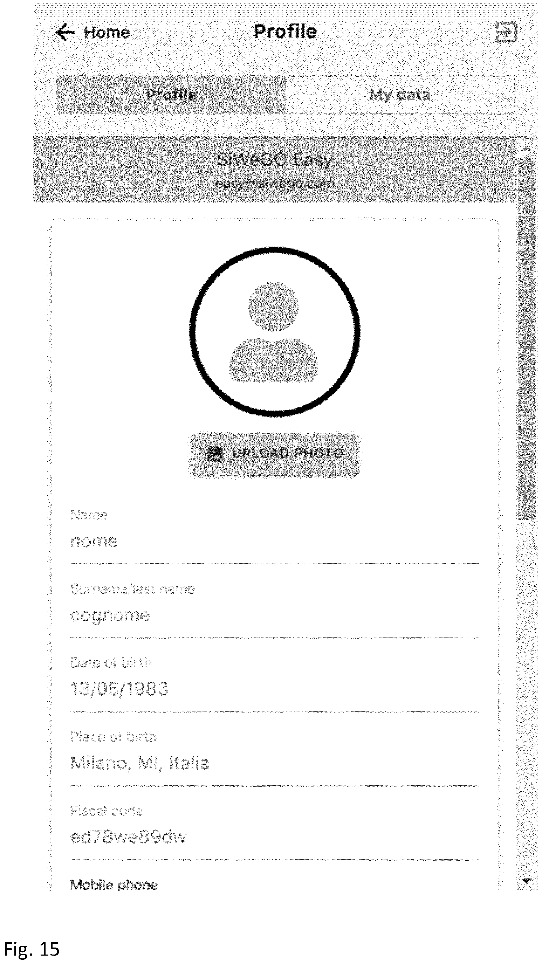

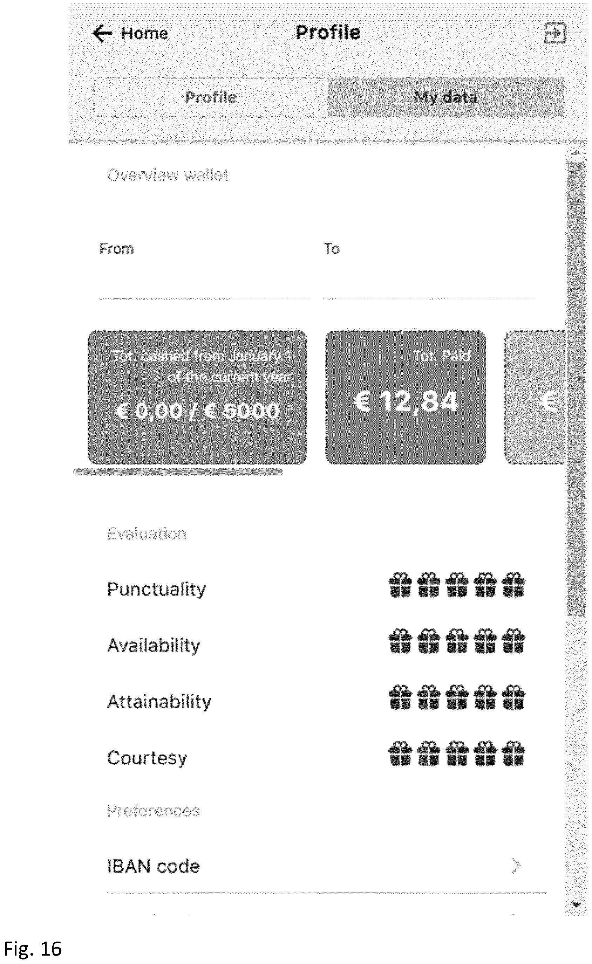

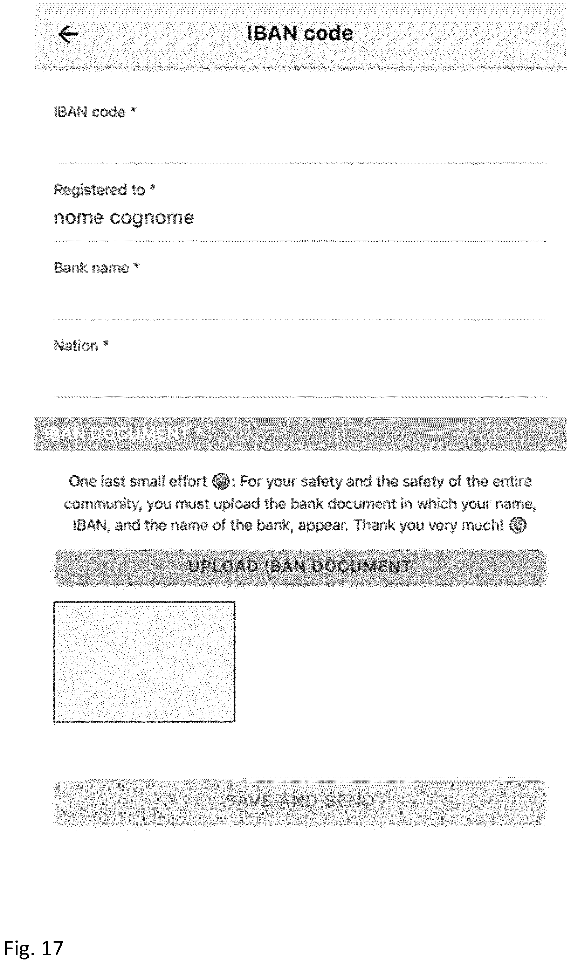

- figures 15-17 show screenshots of the interface of the software platform in which the main user can consult and manage his/her profile.

### DESCRIPTION OF ONE OR MORE EMBODIMENTS ACCORDING TO

### THE PRESENT INVENTION

With reference to the cited figures, reference numeral 1 denotes in its entirety a software platform for organising dispatches and/or transport of goods according to the present invention.

The software platform 1 object of the present invention substantially comprises:
- an application/software executable on an electronic terminal (smartphone, tablet, PC,...) that has a user interface, preferably of the graphic screen type, configured to receive information from the user (via touch-screen or via other peripherals);
- a database 2 configured to collect the profiles identifying a plurality of third-party users;
- a control unit 3 (set of computers and/or servers and/or electronic processors in the network) connected to the user interface and to the database 2 and configured to perform different operations.

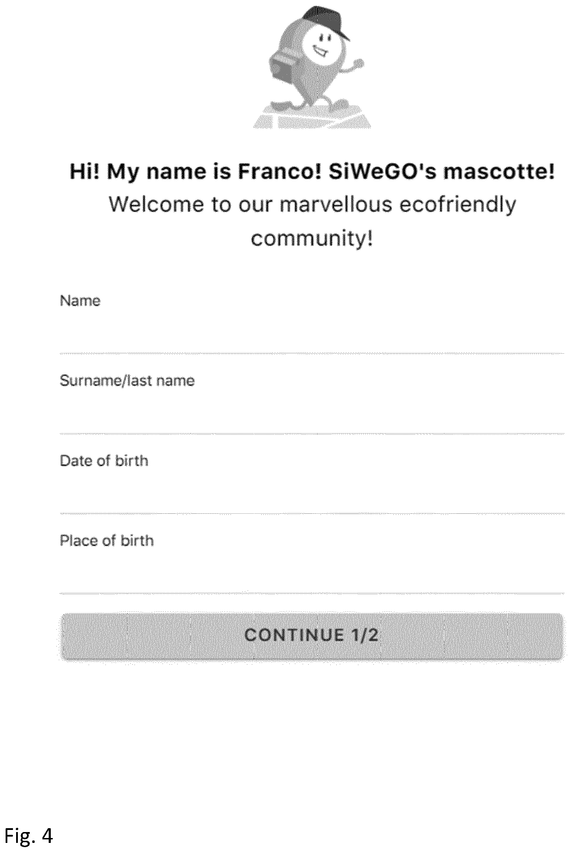

As already mentioned, the community users can register as (figure 4):
- "easy" users: individuals who transport or dispatch;
- "company": legal persons who can only dispatch;
- "professional": legal persons who can both transport and dispatch. Furthermore, the figures in play are as follows:
- "customers" who commission a dispatch of goods (they could be either dispatchers of the goods or recipients of the goods),
- "transporters" who, via a means of transport, transport the goods on behalf of the customers;
- users with both functions.

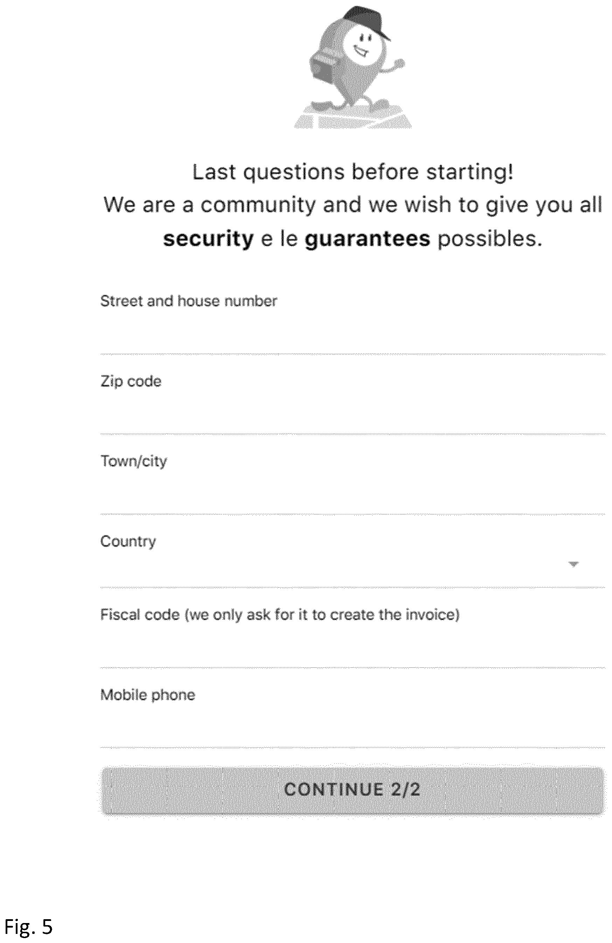

Each user who wishes to register on the platform 1 enters their personal data via said interface so as to generate a corresponding identifying profile of the main user (figures 4-5).

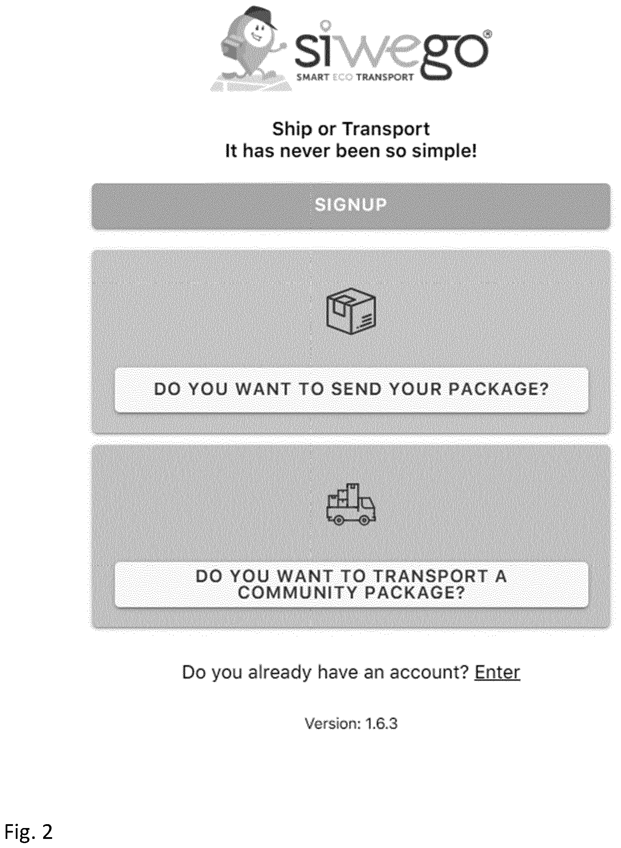

The expression "main user" is used as a generalization of the user who registers on the platform 1 and who subsequently chooses his/her own function which can be (figure 2): "customer function 4" or as "transporter function 5" or as both.

The customer user 4 is the one who wishes to dispatch the goods and who needs transporter users 5.

The transporter user 5 is the one who has a transport vehicle (trucks, cars, motorcycles, bicycles, heavy vehicles, aircraft,...) and who offers himself/herself to one or more dispatching users to transport their goods. The graphic interface is configured to propose a selection to the main user, if he/she has selected the function of customer, of a request to dispatch goods via other third-party users or, if the function of transporter is chosen, to transport goods of other third-party users (figure 2).

Then afterwards, the profile identifying the main user is associated with a code identifying the selection made so as to identify the main user as a customer user 4 or as a transporter user 5.

The database 2 is connected to the user interface and is configured to collect the profiles identifying a plurality of third-party users.

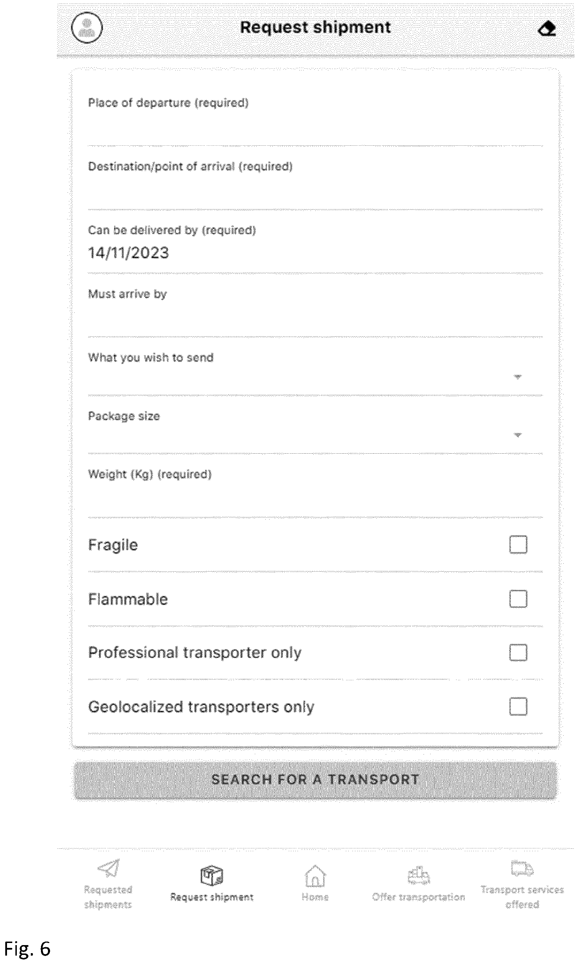

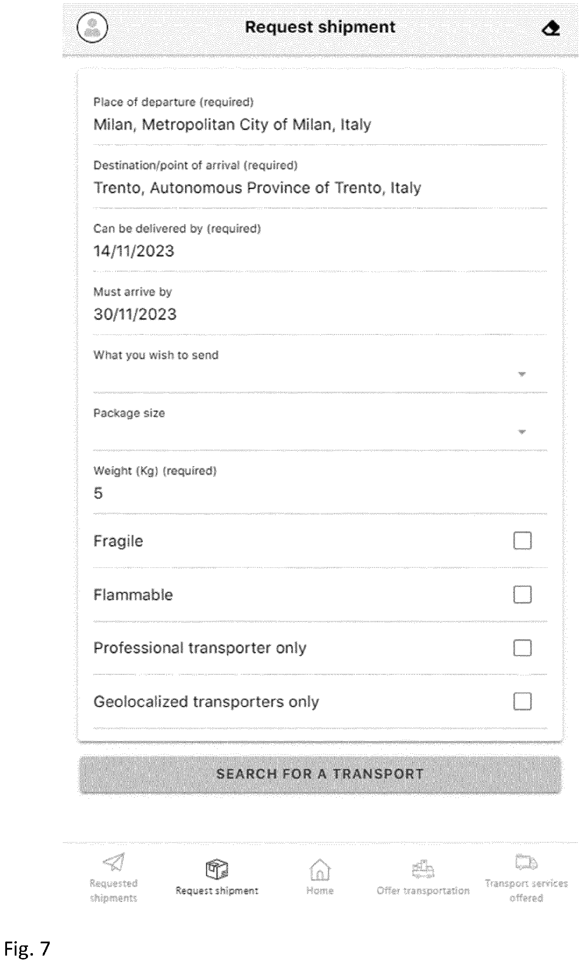

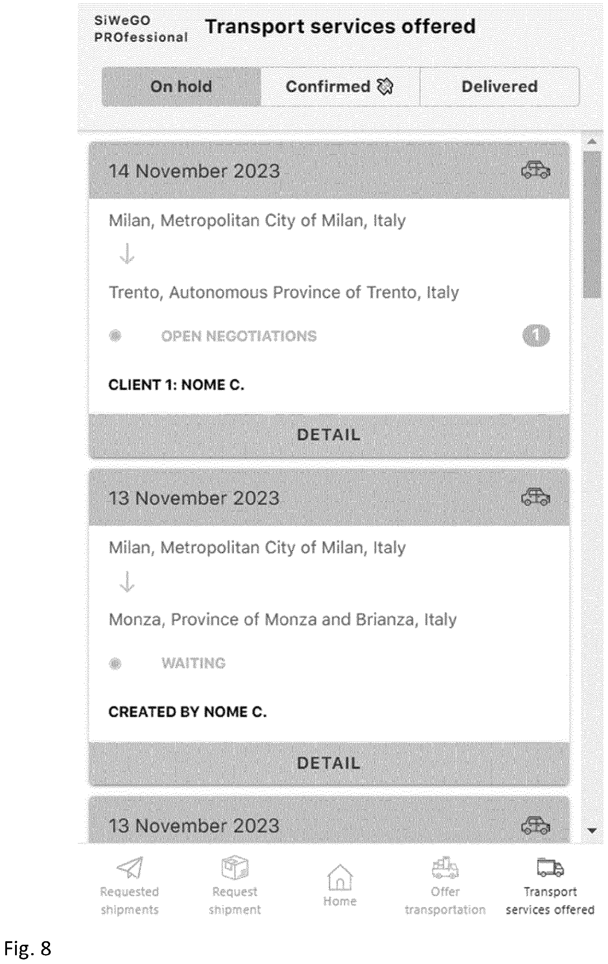

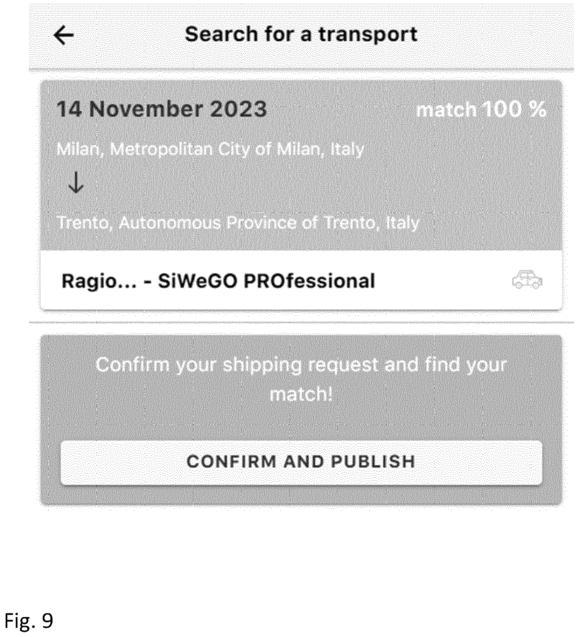

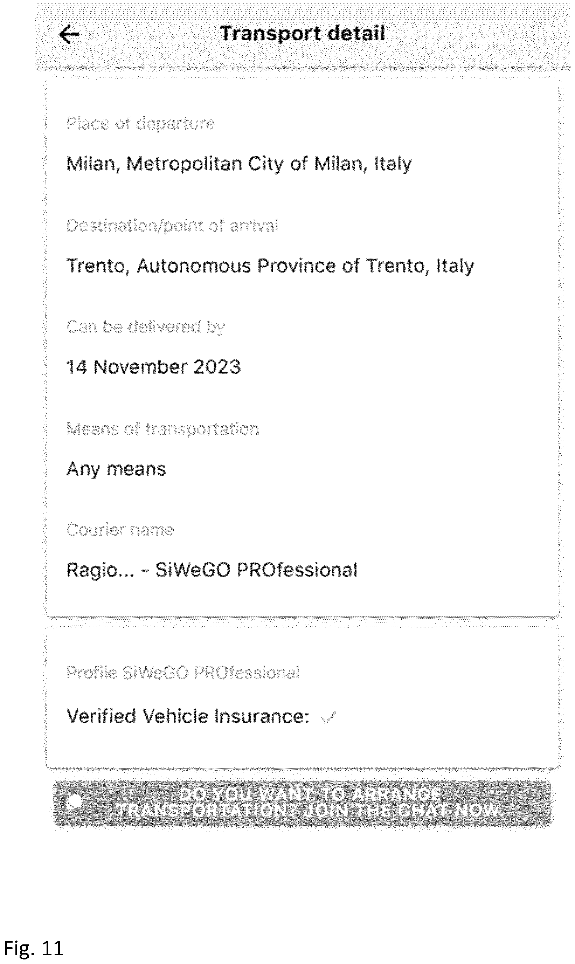

The control unit 3 is connected to the user interface and to the database 2 and is configured to:
receive from the main user, identified as the customer user 4 via said user interface, a request to dispatch goods from a collection place 6a of the goods to a delivery place 6b of the goods on a certain collection date 7a and a certain delivery date 7b (figures 6, 7);
search inside the database 2 for profiles of transporter users 5 that have selected the function of transporting goods from a departure place A to an arrival place B according to a path that includes the collection place 6a of the goods and the delivery place 6b of the goods and the collection date 7a and delivery date 7b indicated (figures 8-9). It should be noted that said transporter users have already pre-entered a predefined route before said request to dispatch goods and therefore the database 2 already contains such information beforehand;
put the profile(s) of found transporter users 5 that correspond to the search criteria in electronic contact with the customer user 4, preferably via a chat message (figure 11);
confirm 10 the transport of the goods if the customer user 4 and third-party users find an agreement that is finalised following payment of the agreed amount (it is possible to cancel the negotiation). The confirmation is carried out only after the payment has been made;
create an exchange of money 9, preferably with automatic sending of the bill (it should be noted that the billing only relates to the responsibilities of the platform operator and not the cost of transport), between customer user 4 and transporter user 5, at a previously agreed cost to confirm transport of the goods.

It should be noted that the search step is also called the "matching" step 8, as it envisages that the control unit 3 automatically and in real time determines whether the predefined path made available by the transporter user 5 includes at least the collection place 6a of the goods and the delivery place 6b of the goods and the collection 7a and delivery 7b dates. In such a case, it means that the transporter user 5 is a candidate to transport the goods of one or more dispatcher users.

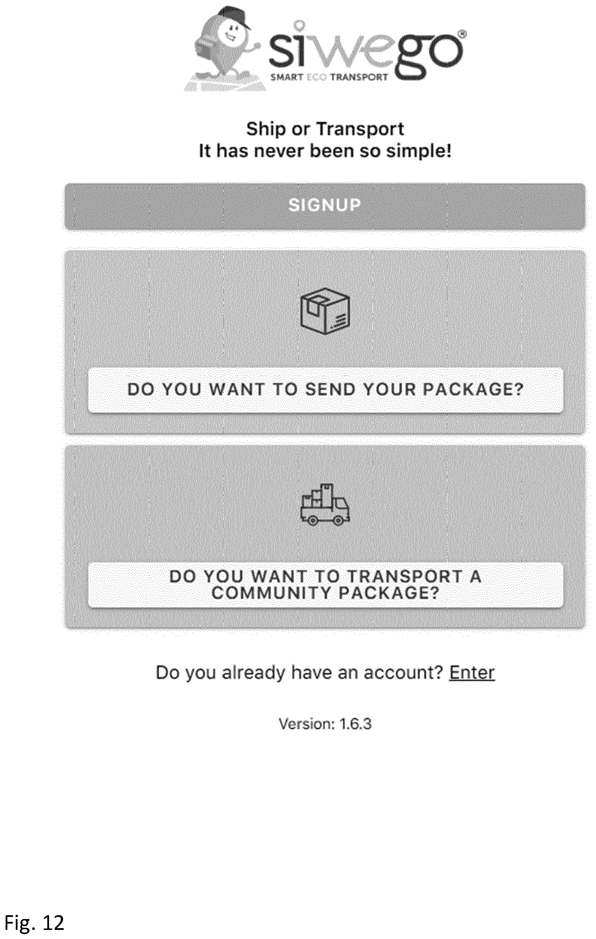

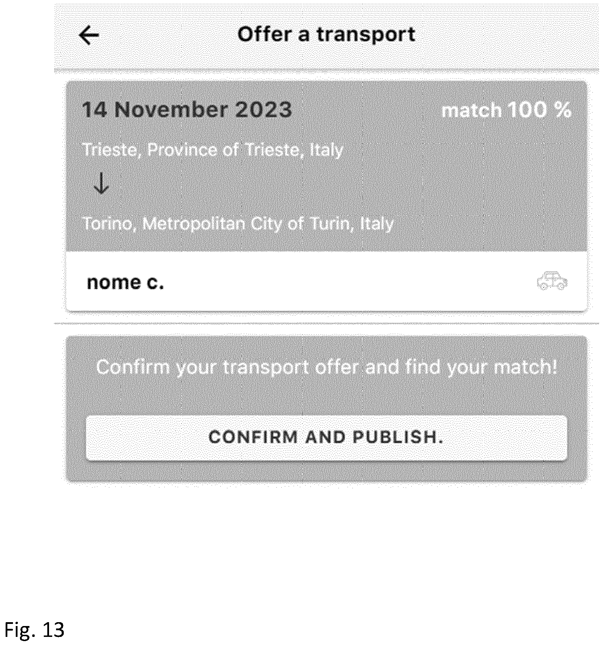

Similarly, if the main user has identified himself/herself as transporter user 5 via said user interface (figures 12-13), the control unit 3 is configured to:
search inside the database 2 for profiles of dispatcher users who need to dispatch goods from a collection place 6a of the goods to a delivery place 6b of the goods where said places are included in said predefined path of the transporter user 5 (path predefined before said search) on a certain collection date 7a and a certain delivery date 7b;
put the profile(s) of found dispatcher users that correspond to the search criteria in electronic contact with the transporter user 5, preferably via a chat message;
confirm 10 the transport of the goods if the transporter user 5 and the dispatcher users find an agreement that is finalised following payment of the agreed amount (the confirmation is given only following payment);
carry out an exchange of money 9 between customer user 4 and transporter user 5 at a pre-agreed cost to confirm the transport of the goods.

Furthermore, the control unit 3 is configured to generate a collection code 11a, preferably OTP (acronym of one time password), to collect the goods from the collection place 6a and a delivery code 11b, preferably OTP, to deliver the goods to the delivery place 6b unless otherwise agreed in chat (the delivery places could vary and therefore no longer correspond to the original request).

The graphic interface is configured to show the same collection code 11a to the customer user 4, via an electronic device thereof such as a smartphone, (not to the transporter) for an identity verification of the codes, and to show the same delivery code 11b to the user who receives the goods, via an electronic device thereof such as a smartphone, at the delivery place 6b for an identity verification of the codes.

It should be noted that the collection 11a and delivery 11b codes are not visible to the transporter user, but the latter inserts them into the system via the graphic interface, via an electronic device thereof such as a smartphone. That is, the control unit 3 is configured to receive the collection 11a and delivery 11b code that the transporter user enters upon collection and delivery, and to compare said collection 11a and delivery 11b codes with the code generated internally by the system in relation to that order.

If the control unit detects the identity of the codes then it means that there is a match between the selected transporter and the customer.

Thereby, thanks to the double OTP code (collection and delivery) it is possible to be sure of the goods' collection and their delivery. In fact, the platform 1 advantageously manages to replace the signatures which are difficult to verify on an alleged transport document, increasing security, and eliminating the risk of transmission of Covid19 and obtaining an optimisation of the documentation exchanged in this juncture.

In accordance with another aspect of the present invention, the control unit 3 is configured to:
- receive from the transporter user 5 a position signal, preferably in real-time, via an electronic device (e.g., smartphone) held by the transporter and comprising a position identification module, preferably GPS;
- share the information on the position of the transporter contained in said position signal with said customer user 4 so as to achieve traceability 13 of the goods in real time.

Thereby, it is possible to have a constant and real-time tracking of the goods dispatched in particular for the benefit of the customer user 4.

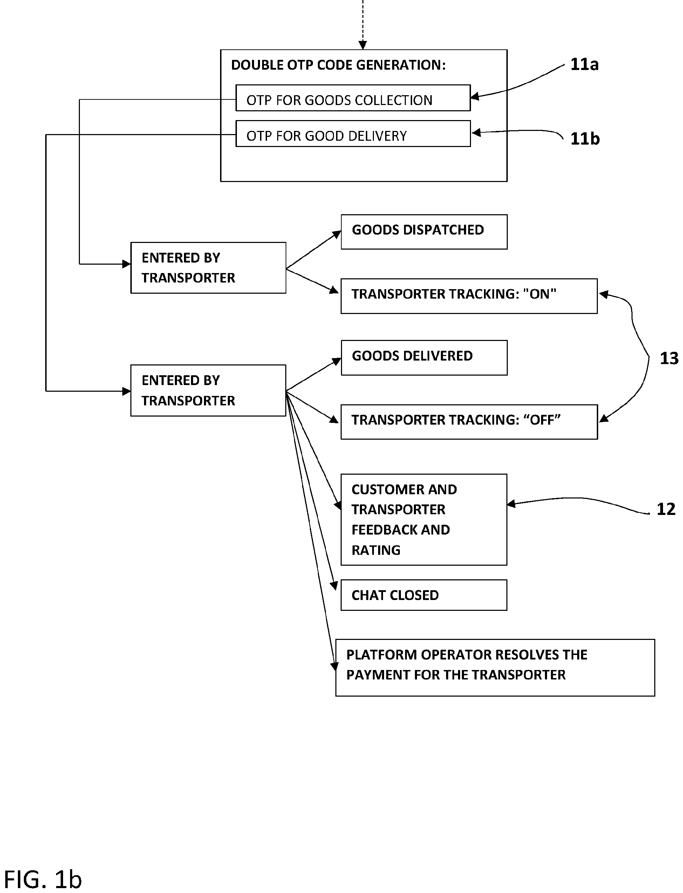

It should be noted that the tracking step is enabled only following the confirmation of the collection code 11a ("ON" in figure 1b) and ends with the confirmation of the delivery code 11b ("OFF" in figure 1b).

In accordance with a further aspect of the present invention, the control unit 3 is configured to:
- receive an evaluation signal 12 from the customer user 4 relating to the transporter user 5 and/or vice versa;
- associate the evaluation with the respective customer user 4 and/or transporter user and catalogue the evaluation so as to make a rating.

It should be noted that this last evaluation step is activated only following the confirmation of the delivery code 11b ("OFF" in figure 1b) which certifies that the transport service of the goods has ended and that the transaction is closed.

A further object of the present invention is a method for organising dispatches and/or transport of goods, which derives directly from the platform 1 described above, which is fully referred to in the following. In any case, the method comprises the following operating steps:
- receiving personal data of the main user via the user interface,
- generating a corresponding profile identifying the main user,
- providing the main user with a selection of request to dispatch goods via other third-party users or to transport goods of other third-party users;
- associating with the profile identifying the main user a code identifying the selection made so as to identify the main user as a customer user 4 or as a transporter user 5;
- setting up the database 2 connected to the user interface and configured to collect the profiles identifying a plurality of third-party customer users and transporter users;
- receiving from the main user, identified as the customer user 4 via said user interface, a request to dispatch goods from a collection place 6a of the goods to a delivery place 6b of the goods and from a certain collection date 7a to a certain delivery date 7b;
- searching inside a database for profiles of transporter users 5 that have selected the function of transporting goods from a departure place A to an arrival place B according to a path that includes the collection place 6a of the goods and the delivery place 6b of the goods and the collection and delivery dates;
- putting the profile(s) of found transporter users 5 that correspond to the search criteria in electronic contact with the customer user 4, preferably via a chat message;
- confirming, via successful payment, the transport 10 of the goods if the customer user 4 and the third-party users reach an agreement. Alternatively, if the main user is identified as a transporter user 5 via said user interface, he/she makes available his/her availability to transport goods according to a predefined path from a departure place A to an arrival place B from a certain date "X" to a date "Y".

The method then envisages to:
- search inside the database 2 for profiles of dispatcher users who need to dispatch goods from a collection place 6a of the goods to a delivery place 6b of the goods in which said places are included in said predefined path of the transporter user 5 and in which the collection and delivery dates are contained within the dates "X" and "Y";
- put the profile(s) of the found dispatcher users that correspond to the search criteria in electronic contact with the transporter user 5, preferably via a chat message;
- confirm, via successful payment, the transport of the goods if the transporter user 5 and the dispatcher users reach an agreement.

As already described for the platform 1, the method envisages carrying out an exchange of money 9 between customer user 4 and transporter user 5 at a pre-agreed cost to confirm the transport of the goods.

Furthermore, similarly to what has already been described with reference to the platform 1, the method envisages a step of generating a collection code 11a, preferably OTP, to collect the goods from the collection place 6a and a delivery code 11b, preferably OTP, to deliver the goods to the delivery place 6b. The graphic interface is configured to show the same collection code 11a to the transporter user 5 and to the customer user 4 for an identity verification of the codes, and to show the same delivery code 11b to the transporter user 5 and a user who receives the goods at the delivery place 6b for an identity verification of the codes.

Further, the method can envisage the following steps:
- receiving from the transporter user 5 a position signal, preferably in real-time, via an electronic device comprising a position identification module, preferably GPS;
- sharing the information on the position of the transporter contained in said position signal with said customer user 4 so as to achieve traceability 13 of the goods in real time.

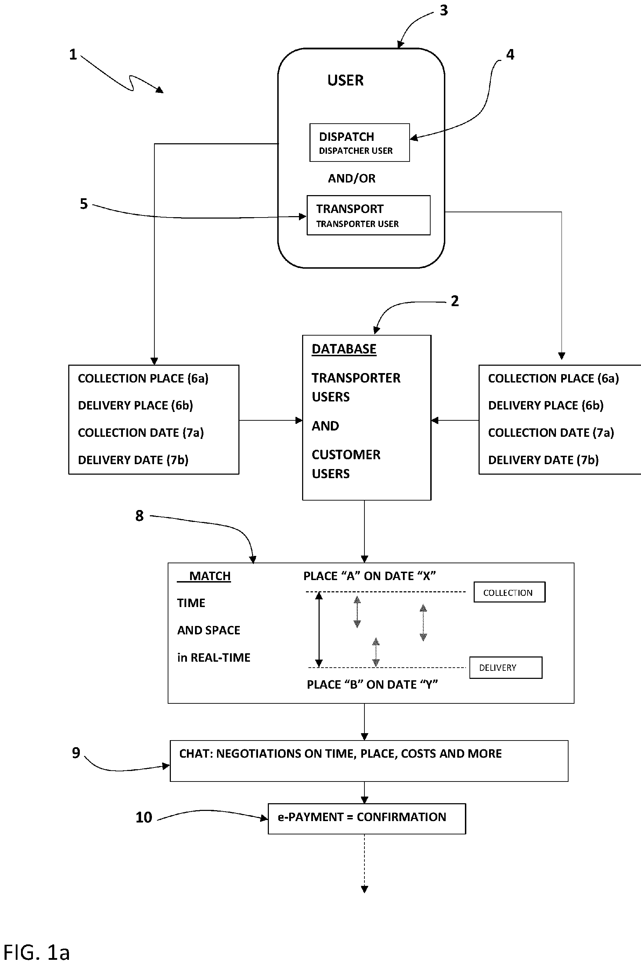

It should be noted that the tracking step is enabled only following the confirmation of the collection code 11a ("ON" in figure 1a) and ends with the confirmation of the delivery code 11b ("OFF" in figure 1b).

Finally, the method comprises the following operating steps:
- receiving an evaluation signal 12 from the customer user 4 relating to the transporter user 5 and/or vice versa;
- associating the evaluation with the respective customer user 4 and/or transporter user and catalogue the evaluation so as to make a rating.

It should be noted that this last evaluation step is activated only following the confirmation of the delivery code 11b ("OFF" in figure 1b) which certifies that the transport service of the goods has ended and that the transaction is closed.

The present invention achieves the set objects.

In particular, the present invention aims to occupy the unused empty space of each vehicle (professional or not) via an easy-to-use, secure application that operates in real-time and is capable of matching users, dispatchers and transporters, in real time.

The present invention, unlike the currently known platforms on the market, has the advantage of proposing to its users not only offers exclusively from professional transporters or from private individuals, but also a combination of the two modes, resulting in being more flexible (since, depending on the type of goods to be dispatched, there are more possible transport choices), more reliable, and with greater usability.

Technically, the present invention achieves the set objectives by creating a match between the route offered by the transporter (route that the transporter manually indicates) and desired by the customer and the theoretical infinite segments generated from the collection point to the delivery point of the goods indicated by the customer and contained in the transporter's route that must already be completed in that predefined date range.

Furthermore, the present invention:
- facilitates and makes communication between customer and transporter more secure thanks to the chat;
- guarantees the payments for the transporter;
- makes the certainty of the goods' collection and delivery more secure (thanks to the OTP codes) and sustainable;
- facilitates the geolocation of the transporter for the customer;
- achieves, through a double system of reviews, a platform 1 in which the transporters and the customers are reviewed, and thus encouraged to have the best professional behaviours.

## Claims

1. A software platform (1) for organising dispatches and/or transport of goods, comprising:
- a user interface configured to:
receive personal data of the main user,
generate a corresponding profile identifying the main user,
provide the main user with a selection of request to dispatch goods via other third-party users or to transport goods of other third-party users;
associate with the profile identifying the main user a code identifying the selection made so as to identify the main user as a customer user (4) or as a transporter user (5);
- a database (2) connected to the user interface and configured to collect the profiles identifying a plurality of third-party users;
- a control unit (3) connected to the user interface and to the database (2) and configured to:
receive from the main user, identified as the customer user (4) via said user interface, a request to dispatch goods from a collection place (6a) of the goods to a delivery place (6b) of the goods from a certain collection date (7a) to a certain delivery date (7b);
subsequently search inside the database (2) for profiles of transporter users (5) that have selected the function of transporting goods along a predefined route before said request to dispatch goods, from a departure place (A) to an arrival place (B) according to a path that includes the collection place (6a) of the goods and the delivery place (6b) of the goods and according to times that include said collection date (7a) and said delivery date (7b);
put the profile(s) of found transporter users (5) that correspond to search criteria in electronic contact with the customer user (4), preferably via a chat message;
generate a confirmation signal (10) if the customer user (4) and the transporter user (5) find an agreement for the transport of the goods;
said control unit (3) being further configured to:
generate a collection code (11a), preferably OTP, to collect the goods from the collection place (6a) and a delivery code (11b), preferably OTP, to deliver the goods to the delivery place (6b);
send said collection code (11a) and said delivery code (11b) respectively to an electronic device associated with the dispatcher customer user (4) and to an electronic device associated with the customer user (4) who receives the goods;
said graphic interface being configured to receive in input from the transporter user (5) a collection code (11a) and a delivery code (11b) referred by the dispatcher customer user (4) and by the customer user (4) who receives the goods;
said control unit (3) being configured to:
check whether said collection (11a) and delivery (11b) codes referred by the dispatcher customer user (4) and by the customer user (4) who receives the goods, correspond to the collection (11a) and delivery (11b) codes generated by the control unit (3);
confirm the execution of the transport if the verification is successful.

2. A software platform (1) for organising dispatches and/or transport of goods, comprising:
- a user interface configured to:
receive personal data of the main user,
generate a corresponding profile identifying the main user,
provide the main user with a selection of request to dispatch goods via other third-party users or to transport goods of other third-party users;
associate with the profile identifying the main user a code identifying the selection made so as to identify the main user as a customer user (4) or as a transporter user (5);
- a database (2) connected to the user interface and configured to collect the profiles identifying a plurality of third-party users;
- a control unit (3) connected to the user interface and to the database (2) and configured to:
receive from the main user, identified as the transporter user (5) via said user interface, availability to transport goods according to a predefined path from a departure place (A) to an arrival place (B) and temporally from a certain date (X) to a certain date (Y);
subsequently search inside the database (2) for profiles of dispatcher users who need to dispatch goods from a collection place (6a) of the goods to a delivery place (6b) of the goods from a certain collection date (7a) to a certain delivery date (7b) in which said places and times are included in said predefined path of the transporter user (5) and within said dates;
put the profile(s) of found dispatcher users that correspond to search criteria in electronic contact with the transporter user (5), preferably via a chat message;
generate a confirmation signal (10) if the customer user (4) and the transporter user (5) find an agreement for the transport of the goods;
said control unit (3) being further configured to:
generate a collection code (11a), preferably OTP, to collect the goods from the collection place (6a) and a delivery code (11b), preferably OTP, to deliver the goods to the delivery place (6b);
send said collection code (11a) and said delivery code (11b) respectively to an electronic device associated with the dispatcher customer user (4) and to an electronic device associated with the customer user (4) who receives the goods;
said graphic interface being configured to receive in input from the transporter user (5), via an electronic device thereof, a collection code (11a) and a delivery code (11b) referred by the dispatcher customer user (4) and the customer user (4) who receives the goods;
said control unit (3) being configured to:
check whether said collection (11a) and delivery (11b) codes referred by the dispatcher customer user (4) and by the customer user (4) who receives the goods, correspond to the collection (11a) and delivery (11b) codes generated by the control unit (3);
confirm the execution of the transport if the verification is successful.

3. The platform (1) according to any one of the preceding claims **characterised in that** said control unit (3) is configured to enable an exchange of money (9) between the customer user (4) and the transporter user (5), at a previously agreed cost to confirm transport of the goods.

4. The platform (1) according to any one of the preceding claims, **characterised in that** the control unit (3) is configured to generate said collection code (11a) and said delivery code (11b), as OTP (one time password) codes.

5. The platform (1) according to any one of the preceding claims, **characterised in that** the control unit (3) is configured to:
- receive from the transporter user (5) a position signal, preferably in real-time, via an electronic device comprising a position identification module, preferably GPS;
- share the information on the position of the transporter contained in said position signal with said customer user (4) so as to achieve traceability (13) of the goods in real time.

6. The platform (1) according to any one of the preceding claims **characterised in that** said control unit (3) is configured to:
- receive an evaluation signal (12) from the customer user (4) relating to the transporter user (5) and/or vice versa;
- associate the evaluation with the respective customer user (4) and/or transporter and catalogue the evaluation so as to make a rating.

7. The method for organising dispatches and/or transport of goods, comprising the following operating steps:
- receiving personal data of the main user via a user interface,
- generating a corresponding profile identifying the main user,
- providing the main user with a selection of request to dispatch goods via other third-party users or to transport goods of other third-party users;
- associating with the profile identifying the main user a code identifying the selection made so as to identify the main user as a customer user (4) or as a transporter user (5);
- setting up a database (2) connected to the user interface and configured to collect the profiles identifying a plurality of third-party users;
- receiving from the main user, identified as the customer user (4) via said user interface, a request to dispatch goods from a collection place (6a) of the goods to a delivery place (6b) of the goods from a certain collection date (7a) to a certain delivery date (7b);
- subsequently searching inside a database (2) for profiles of transporter users (5) that have selected the function of transporting goods from a departure place (A) to an arrival place (B) along a predefined route before said request to dispatch goods, according to a path that includes the collection place (6a) of the goods and the delivery place (6b) of the goods and according to times that include said collection date (7a) and said delivery date (7b);
- putting the profile(s) of found transporter users (5) that correspond to the search criteria in electronic contact with the customer user (4), preferably via a chat message;
- generating a confirmation signal (10) if the customer user (4) and the transporter user (5) find an agreement for the transport of the goods;
- the method further comprises the steps of generating a collection code (11a), preferably OTP, to collect the goods from the collection place (6a) and a delivery code (11b), preferably OTP, to deliver the goods to the delivery place (6b);
- sending said collection code (11a) and said delivery code (11b) respectively to an electronic device associated with the dispatcher customer user (4) and to an electronic device associated with the customer user (4) who receives the goods;
- receiving, via an electronic device associated with the transporter user (5), a collection code (11a) and a delivery code (11b) which are referred by the dispatcher customer user (4) and the customer user (4) who receives the goods;
- checking whether said collection (11a) and delivery (11b) codes referred by the dispatcher customer user (4) and by the customer user (4) who receives the goods, correspond to the collection (11a) and delivery (11b) codes generated by the control unit (3);
- confirming the execution of the transport if the verification is successful.

8. The method for organising dispatches and/or transport of goods, comprising the following operating steps:
- receiving personal data of the main user via a user interface,
- generating a corresponding profile identifying the main user,
- providing the main user with a selection of request to dispatch goods via other third-party users or to transport goods of other third-party users;
- associating with the profile identifying the main user a code identifying the selection made so as to identify the main user as a customer user (4) or as a transporter user (5);
- setting up a database (2) connected to the user interface and configured to collect the profiles identifying a plurality of third-party users;
- receiving from the main user, identified as a transporter user (5) via said user interface, availability to transport goods according to a predefined path from a departure place (A) to an arrival place (B) and temporally from a certain date (X) to a certain date (Y);
- subsequently searching inside the database (2) for profiles of dispatcher users who need to dispatch goods from a collection place (6a) of the goods from a certain collection date (7a) to a certain delivery date (7b) wherein said places and times are included in said predefined path of the transporter user (5) and within said dates;
- putting the profile(s) of found dispatchers that correspond to search criteria in electronic contact with the transporter user (5), preferably via chat messages;
- generating a confirmation signal (10) if the customer user (4) and the transporter user (5) find an agreement for the transport of the goods;
- the method further comprises the steps of generating a collection code (11a), preferably OTP, to collect the goods from the collection place (6a) and a delivery code (11b), preferably OTP, to deliver the goods to the delivery place (6b);
- sending said collection code (11a) and said delivery code (11b) respectively to an electronic device associated with the dispatcher customer user (4) and to an electronic device associated with the customer user (4) who receives the goods;
- receiving, via an electronic device associated with the transporter user (5), a collection code (11a) and a delivery code (11b) which are referred by the dispatcher customer user (4) and the customer user (4) who receives the goods;
- checking whether said collection (11a) and delivery (11b) codes referred by the dispatcher customer user (4) and by the customer user (4) who receives the goods, correspond to the collection (11a) and delivery (11b) codes generated by the control unit (3);
- confirming the execution of the transport if the verification is successful.

9. The method according to any one of claims 7 to 8, **characterised in that** it comprises a step of enabling an exchange of money (9), between a customer user (4) and transporter user (5), at a previously agreed cost for confirming transport of the goods.

10. The method according to any one of claims 7 to 9, **characterised in that** said step of generating said collection code (11a) and said delivery code (11b) envisages generating them as OTP (one time password) codes.

11. The method according to any one of claims 7 to 10, **characterised in that** it comprises the following operating steps:
- receiving from the transporter user (5) a position signal, preferably in real-time, via an electronic device comprising a position identification module, preferably GPS;
- sharing the information on the position of the transporter contained in said position signal with said customer user (4) so as to achieve traceability (13) of the goods in real time.

12. The method according to any one of claims 7 to 11, **characterised in that** it comprises the following operating steps:
- receiving an evaluation signal (12) from the customer user (4) relating to the transporter user (5) and/or vice versa;
- associating the evaluation with the respective customer user (4) and/or transporter and cataloguing the evaluation so as to make a rating.
